# EUROPEAN PATENT APPLICATION

(11) **EP 2 423 862 A1**
(43) Date of publication of application: **29.02.2012**
(21) Application number: 10305934.1
(22) Date of filing: 31.08.2010
(51) Int. Cl.: G06Q 10/00

(54) **Method and system for a floating inventory**

(71) Applicant: Amadeus S.A.S., 06902 Sophia Antipolis (FR)
(72) Inventor: Debarge, Anthony, 06600 Antibes (FR); Mioland, Celine, 06600 Antibes (FR); Rabbe, Sophie, 06250 Mougins (FR); Larosa, Philippe, 06370 Mouans Sartoux (FR); Boudia, Mourad, 06600 Antibes (FR)
(74) Representative: Coret, Sophie V.G.A.

(57) **Abstract**

The method according to a preferred embodiment of the present invention allows managing an inventory of items where a disconnection has been done between the physical item (as offered by a provider) and the marketing offering (which availability and price will be requested by a customer). A physical item can thus be marketed in several marketing offers, and a booking in one of those marketing offers is not directly assigned to a physical item but is allowed to "float" between them, so as to maximize the availability.
The method according to a preferred embodiment of the present invention allows multi-days inventory containing more marketing products than physical ones.
A preferred embodiment of the present invention provides the possibility to choose between a strong continuity for the bookings (the booking will be refused if it can not be placed continuously for the whole duration of its stay), or a softer continuity that allows possible changes of room type during the stay, while minimizing their numbers.

## Description

### Field of the invention

The present invention relates to the field of management of inventory data, particularly to a method and system for a floating inventory of resources (e.g. travel resources such as hotel rooms, car rental or tickets for shows or sport events).

### Background of the invention

Service resources, in particular travel related resources (e.g. hotel rooms, rented cars, flight seats), but also for example tickets for shows or sport events must be treated as perishable goods as they are lost if not sold in time. To try to maximise the revenue and the exploitation of such resources, several techniques have developed in recent years, normally called revenue management or yield management techniques. They are based on the attempt to understand the customers' needs and requests in order to sell as many resources as possible together with maximising the revenue. One of the goals of the yield management techniques is to maximise the exploitation of the available resources, i.e. to minimize the available resources which are not allocated, for example empty rooms in a hotel or non-rented cars for a rental company. Any resource which is not allocated by a certain time is a loss for the company.

Patent application EP 1840806 "System and method of managing an inventory of services resources", VIALE, Valérie; RAUFASTE, Nathalie, discloses a method for managing an inventory of perishable goods (e.g. hotel rooms) with the object of satisfying as many customer requests as possible at booking time. The method disclosed in EP1840806 is based on a sort of availability counters: this has the drawback that, to be able to link the availabilities to each other (for multi-days stays and room types belonging to the same group), artificial sets have to be built ("meta-groups" and "sub-groups"). Those sets become twisted and their number becomes huge when the problem grows big. It induces a lot of availabilities data storage and computations to update all those availabilities every time a sell is being processed. Also the counter approach can not maintain the continuity of the bookings: the sub-groups concept allows to know whether a booking request can be accepted as continuous or not. But once the acceptance is made, the daily counters are updated, and there is no way to keep the information about the continuity of the bookings. This continuity will then not be granted anymore when further requests will be accepted.
Furthermore, the method disclosed in EP1840806 does not allow the management of multi-days bookings if there is no possibility to place them completely continuously. This would induce sub-optimality in the occupation of the hotel. Also, in case of changes in the inventory (like a change in structure of a group of room types, or a change in the number of allocated rooms for a group), the process of re-assigning the already accepted bookings from a group to other room types or groups would be tricky, because the group counters don't have the information where the individual bookings are assigned.

### Object of the invention

An object of the present invention is to alleviate at least some of the problems associated with the prior art systems.

According to one aspect of the present invention there is provided a reservation method for maximizing, through a client-server data processing system, the exploitation of a plurality of perishable service resources, each resource of the plurality of perishable service resources being classified according to a plurality of criteria, the method including the steps of: the server maintaining in a repository information on the plurality of perishable service resources, indicating for each resource the availability with respect to predetermined units of time; the server receiving, by a reservation client module an availability query for at least one resource for a period of time which is a multiple of the predetermined unit of time, including an indication of at least one criterion of the plurality of criteria; the server checking on the repository the availability of at least one resource of the plurality of perishable service resources satisfying the at least one requested criterion over the requested period; responsive to at least one resource being available the server communicating the availability to the reservation client module; and responsive to the client reservation module confirming the reservation of the resource, recording a floating reservation in the repository, flagging all resources in the repository satisfying the at least one requested criterion, wherein a resource is considered available for future enquiries if the number of floating reservations previously recorded for each set of at least one criterion is lower than a predetermined acceptable booking thresholds for that set of at least one criterion.

According to another embodiment of the present invention, one of the plurality of criteria is a continuity parameter, according to which the reservation request can be conditioned to the availability of the same resource for the whole period of time.

The method according to a preferred embodiment of the present invention allows managing an inventory of items where a disconnection has been done between the physical item (as offered by a provider) and the marketing offering (which availability and price will be requested by a customer). A physical item can thus be marketed in several marketing offers, and a booking in one of those marketing offers is not directly assigned to a physical item but is allowed to "float" between them, so as to maximize the availability.
The method according to a preferred embodiment of the present invention allows multi-days inventory containing more marketing products than physical ones.
A preferred embodiment of the present invention provides the possibility to choose between a strong continuity for the bookings (the booking will be refused if it can not be placed continuously for the whole duration of its stay), or a softer continuity that allows possible changes of room type during the stay, while minimizing their numbers.
In a preferred embodiment of the present invention, the method includes, responsive to a completion trigger event, the system transforming the floating reservation into a fixed reservation assigning to each confirmed reservation a specific resource. The trigger event can be e.g. an administrator input or the reach of time thresholds. The step of assigning to each confirmed reservation a specific resource can be done in several different ways: a possible embodiment is to assign the resources so that the number of reservation requests to which a single resource is assigned for the whole period of time is maximized. An alternative is to assign the resources so that the length of continuous period of assignment of a single resource is maximised. Yet another possibility is assigning the resources so that the average length of continuous period of assignment of all resources is maximised.

The method according to an embodiment of the present invention also allows to get availability figures for a given element/group on a given day/period. The availability figure can be asked for a continuous period (number of bookings that can be accepted continuously for an element/group on a specific period) or for a non-continuous interval (number of bookings that can be accepted non-continuously for a group on a specific period).

According to a second aspect of the present invention there is provided a system comprising one or more components adapted to perform the method described above.

According to a further embodiment of the present invention there is provided a computer program comprising instructions for carrying out the method described above when said computer program is executed on a computer system.

### Brief description of drawings

Reference will now be made, by way of example, to the accompanying drawings, in which:
Figure 1 is a diagram of a reservation system including the floating inventory system in accordance with one embodiment of the present invention;
Figure 2 is a diagram of a general computer system adapted to support the method of a preferred embodiment of the present invention;
Figures 3 to 6 show examples of an inventory according to an embodiment of the present invention, wherein the elements represent a homogeneous set of hotel rooms having similar characteristics; elements are dived in groups according to a subset of their features;
Figure 7 shows a possible customer request for a continuous booking received by the reservation system according to a preferred embodiment of the present invention;
Figure 8 shows a possible customer request for a non-continuous booking received by the reservation system according to a preferred embodiment of the present invention;
Figure 9 is a diagram showing the flow of information according to one embodiment of the present invention.

### Detailed description of the embodiments

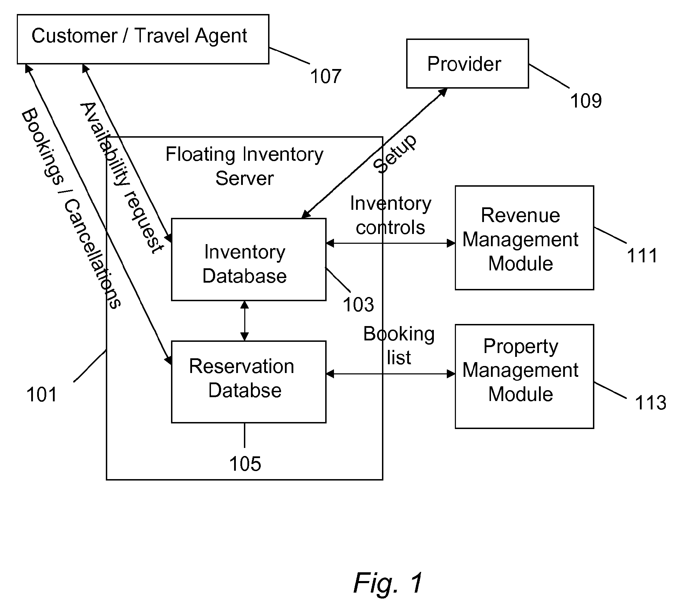

Figure 1 shows an inventory system suitable to implement the method and system according to a preferred embodiment of the present invention. A Floating Inventory Server 101 contains an Inventory Data Base 103 which is connected to a Reservation Data Base 105. The data bases 103 and 105 can exchange data between them; Inventory data base 103 is accessed by a Customer/Travel Agent client 107 for availability requests and by a Provider 109 for possible setup operations. Inventory data base 103 contains the structure in elements/groups, with the daily availability figures for each element. Availability requests (for a given element/group on a given day/period, continuous/non-continuous) by a travel agent will be calculated from those daily element availabilities. Provider 109 can access the Inventory data base 103 in read and write mode in order to perform the set-up of the inventory: e.g. defining/modifying the structure in elements/groups, changing capacities, fixing booking limits. In a preferred embodiment of the present invention the Inventory Data Base 103 is also connected with a Revenue Management Module 111 which gives recommendations on the inventory management. The Revenue Management Module 111 includes functionalities such as computing figures for an analyst to be able to adjust the booking limits and pricing the bookings.
Reservation Data Base 105 is accessed in read and write mode by the Customer/Travel Agent client 107 for bookings/cancellations (e.g. get the price, get the availability, update the counters, store the bookings) and by a Property Management Module 113 for the management of booking lists. The Reservation data base 105 stores the bookings: a booking creation/cancellation triggers an update of availability figures contained in the Inventory data base 103.

Amadeus Hotel Platform of Amadeus IT Group SA is an example of such an Inventory platform wherein a method according to a preferred embodiment of the present invention can be implemented. The inventory system according to a preferred embodiment of the present invention is organised according to a client/server architecture, wherein the Floating Inventory Server receives customer requests by a plurality of client modules, each client module acting on behalf of one or more Customers and/or one or more Travel Agents.

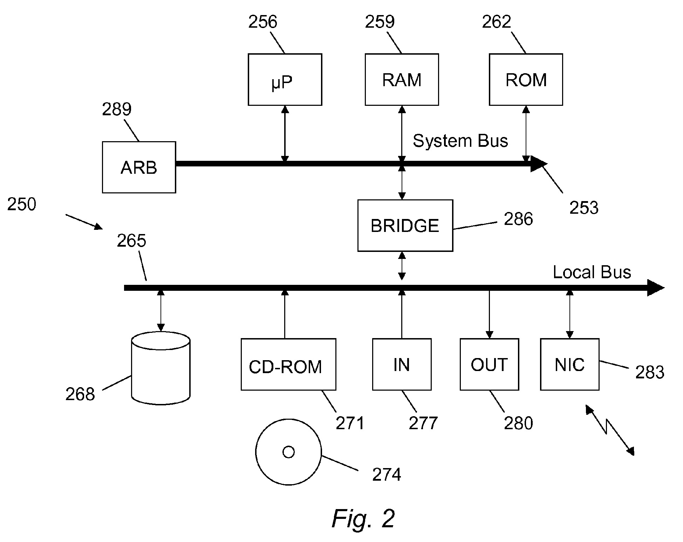

With reference to Figure 2 a generic computer of the system (e.g. computer, Alliance module server, data base management subsystem, router, network server) is denoted with 250. The computer 250 is formed by several units that are connected in parallel to a system bus 253. In detail, one or more microprocessors 256 control operation of the computer 250; a RAM 259 is directly used as a working memory by the microprocessors 256, and a ROM 262 stores basic code for a bootstrap of the computer 250. Peripheral units are clustered around a local bus 265 (by means of respective interfaces). Particularly, a mass memory consists of a hard-disk 268 and a drive 271 for reading CD-ROMs 274. Moreover, the computer 250 includes input devices 277 (for example, a keyboard and a mouse), and output devices 280 (for example, a monitor and a printer). A Network Interface Card 283 is used to connect the computer 250 to the network. A bridge unit 286 interfaces the system bus 253 with the local bus 265. Each microprocessor 256 and the bridge unit 286 can operate as master agents requesting an access to the system bus 253 for transmitting information. An arbiter 289 manages the granting of the access with mutual exclusion to the system bus 253. Similar considerations apply if the system has a different topology, or it is based on other networks. Alternatively, the computers have a different structure, include equivalent units, or consist of other data processing entities (such as PDAs, mobile phones, and the like).

The method according to a preferred embodiment of the present invention is based on an inventory of items, representing perishable goods which are categorized by means of predetermined criteria. Such criteria define certain features of an item according to which a customer may formulate his request. A customer request may be more or less precise according to the number of criteria indicated as mandatory in the request. For example, a customer may request a no-smoking, double-bed room with balcony and sea-view, whereas another customer may request a double-bed room without any other criterion. The more criteria are included in a customer request, the more difficult will be satisfying the request. The object of the method according to a preferred embodiment of the present invention is to satisfy the highest possible number of request in order to maximise the exploitation of available resources. This is done by adopting what we call floating inventory policy, so that a physical item is allocated to a customer as close as possible to the date of use, leaving the possibility of "floating" among different items with the only restriction of satisfying the mandatory set of criteria requirements of each customer. E.g. continuing with the hotel booking example, if a customer simply requests a double-bed room without any indication about the position of the room, about the kind of view from the room window, about the feature of smoking/no-smoking, then this customer request is left "floating" among all possible kinds of double-bed rooms, leaving to more demanding customers a more accurate selection. Such flexibility from the customer may be awarded with a cheaper price of the room: those skilled in the art will appreciate that this pricing policy can be implemented in several different ways, including a variation of the price according to the time when the booking is made, however we are not considering this aspect in the present description: we simply focus on the maximization of resource exploitation, but it is clear that a revenue management mechanism may be put in place to try to maximize the total revenue, with an accurate pricing policy.

Another possible criterion of booking can be its continuity: strong (i.e. the booking will be refused it cannot be placed continuously for the whole duration of the requested stay) or soft (i.e. maximizing the continuity but allowing change of room type during the stay if it is not possible otherwise). The continuity criterion can be set at different levels: e.g. at booking level (i.e. the customer decides the importance of this constraint, with possible variation of prices), at hotel level (e.g. the hotel manager only wants continuous booking); at group level (booking on a particular group may automatically check the continuous availability of one of the elements of the group).

While the present example is designed around the hotel booking case, those skilled in the art will easily appreciate that several other different physical items can be represented instead: just to make some examples the items could be another hotel resource such as a slot for a sauna or a tennis court, but also a car to be rented in a specific period, or a seat on a plane or a theatre and so on. Any limited resource the exploitation of which is restricted by a deadline after which the resource becomes of no value, can benefit by the use of an inventory method according to the present invention. We will provide some details of how a preferred embodiment of the present invention works, always referring to the hotel room example, but it is understood that the same concepts can be applied to several other kinds of inventory items as explained above.

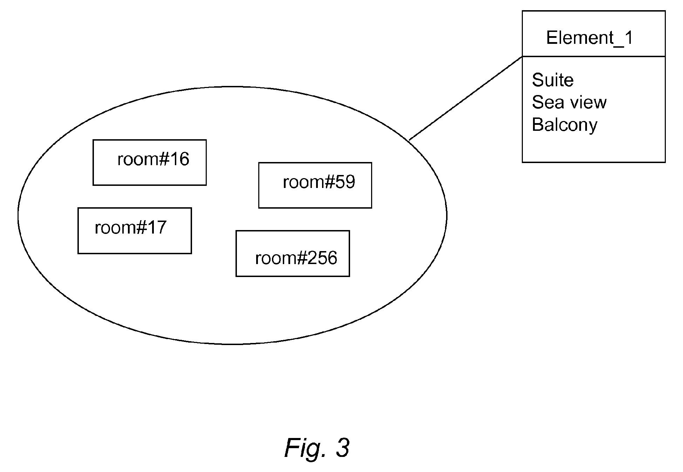

With reference to Fig. 3 a set of items (rooms 16, 17, 59 and 256) is represented. Each room is an item of the physical inventory. The represented rooms of this example are homogeneous in terms of features (Suite, Sea View, Balcony). A room type is a category of rooms, defined by a list of criteria, and a set of 1 to n items fall in this category. This level corresponds to the finest-granularity description of the inventory. For example, the room type represented in Fig.3 is "suite with sea view and a balcony".

In a preferred embodiment of the present invention, to each room type is associated a capacity, i.e. the number of items that are offered to sell in this room type.

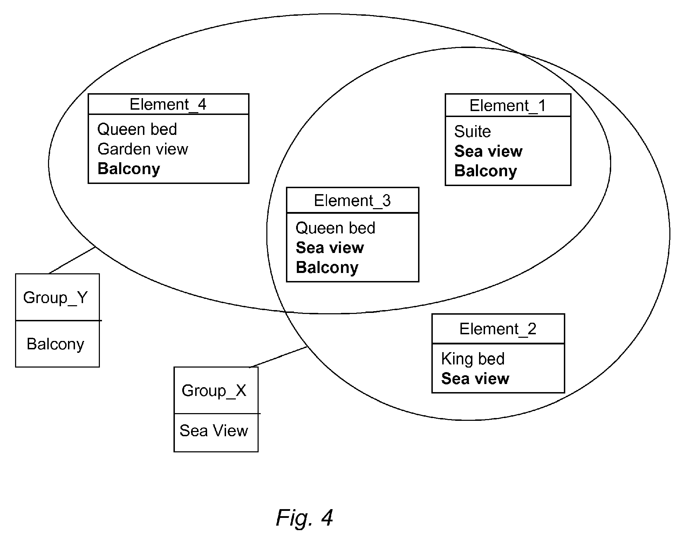

With "group" we mean a set of room types.
For example, as shown in Fig. 4, a group (Group_X) can be "rooms, with sea-view", gathering several room types such as "rooms, with queen bed, with sea-view and a balcony", "rooms, with king bed, with sea-view", and so on. Another group can be "room with a balcony" as represented in Fig. 4 as Group_Y.

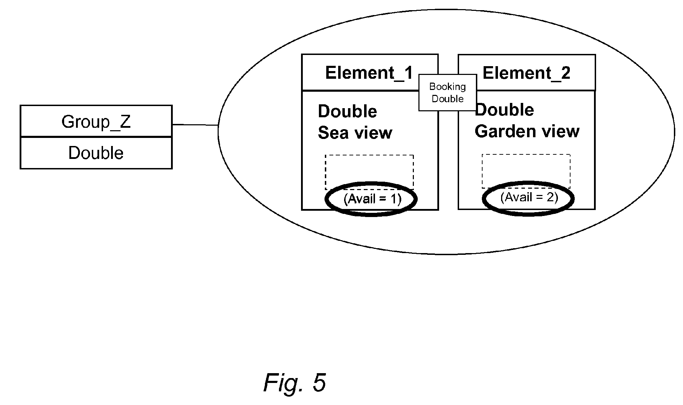

Fig. 5 is a representation of the floating allocation of a booking: when a request for a "double-bed" is received, if there are more than one possible element with the required availability, then the booking is let "floating" among the possible elements. In the present example, we have two elements in the Group_Z with some availability (i.e. counter > 0), therefore the request for a simple "double-bed" is floating between the two elements. In this way when the next customer request is received, there will be a higher probability of being able to satisfy the request. Concretely, the request will be temporarily assigned to the element with the highest availability, but will be allowed to move to the other possible element, if some availability needs to be freed from the element it was temporarily assigned.

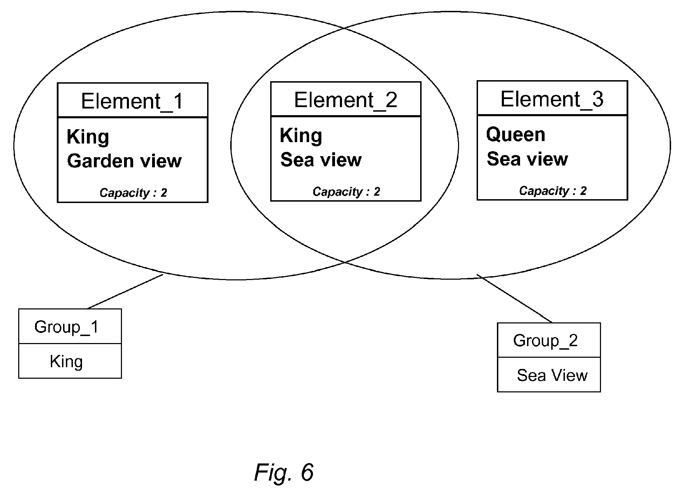

The capacity of each group is calculated as the sum of the capacity of each room type belonging to the group. In the example shown in Fig.6, the capacity of Group_1 "King-bed" is 4, the capacity of Group_2 "Sea View" is 4 but the capacity of a possible super Group (Group_1+ Group_2) would be only 6.

Once the inventory is defined, the provider will create the "products", i.e. what the customer will see, request for availability or book. With "provider" we mean the person or entity in charge of the inventory management: e.g. hotelier, brand manager.
The provider can offer directly room types to sale, in which case the product is equal to a room type. The provider can also create products that are groups,

Thus a physical item, that belongs to only one room type, may belong to several groups, and thus be offered to sell under several products, some being as precise as room types (e.g. "double rooms, with queen bed, with sea-view, located on the higher floors of the hotel"), others being as vague as groups (e.g. "double-bed rooms").

Bookings on products and on dates (check-in → check-out period) are given as input of the system.

It is common sense that a customer, booking a multi-days stay in a hotel, doesn't want to change room during their stay. But at the same time, ensuring the continuity of the stay for all the customers may induce a sub-optimality in the occupation of the hotel, while limited room changes may be possible for some bookings. It is possible incentivising a customer accepting a non-continuous booking by e.g. offering a discount on the price or maybe upgrading to a superior room type for part of the stay. Such incentives might be no longer necessary when a non-continuous stay is the only option left, e.g. when all other rooms are booked very close to the date of use. As mentioned above, we are not considering in the present description pricing strategies which could be combined with the inventory method of the present invention, but those skilled in the art will easily appreciate that several additional tunings and adjustment can be applied to the method in order to improve the revenue.

In a preferred embodiment of the present invention the floating inventory method differentiates the bookings in two categories:
- Booking for which the continuity of the stay must be respected (otherwise the sell is rejected). It first has to be ensured that the room type continuity is respected, meaning that a booking in a group will in fact be booked on the same room type for its whole duration. This is the "continuous floating booking" in the following.
- Booking for which the continuity of the stay is to be respected as best as possible. A differentiation or ranking could be introduced between the bookings of this category, with regards to the importance of the continuity requirement. We will refer to this type of bookings as "non-continuous floating booking" in the following

If the bookings were only on room types, the problem would be trivial, using only availability counters for each room type and day.
The difficulty arises when we introduce bookings on groups ("floating bookings").

In a preferred embodiment of the present invention, a reservation system is provided with a user interface which facilitates the use of the inventory floating system. The user interface proposes one of the two options:
1) the continuous floating bookings, for which the continuity is mandatory;
2) the non-continuous floating bookings, for which the continuity is to be respected as best as possible.

It is quite a big deal to manage both a strong continuity and a floating aspect for a given booking.
To overcome this issue, according to a preferred embodiment of the present invention, the indetermination concerning the room type in which the booking will be continuously assigned, has to be lifted. A continuous booking in a group will therefore be considered as a booking in a room type, the one with the highest availability.

But at the same time we want this booking to be still floating. At this aim, a mechanism that allows moving a continuous floating booking to the other possible room types is introduced. This mechanism is triggered in case a lack of availability is detected for this particular room type and days.

To deal with the possible non-continuity of some floating bookings, we first consider them as totally non-continuous, meaning each booking day is considered independently.
To this purpose, a non-continuous floating booking is split in daily continuous floating bookings.

From this stage, it is now possible to make those non-continuous floating bookings as continuous as possible.

The bookings with the biggest length of stay will intuitively be more difficult to place continuously, whereas the one-day bookings won't cause any trouble. The idea is to sort the bookings by length of stay (the longest first), and place them where they will be the most continuous.
Bookings could also be sorted by priority level, considering for example possible privilege status of a customer.

A parameter in the user interface allows the possibility of accepting bookings even if the availability is not enough (overbooking).
In this case, bookings are assigned to the requested product and period that have the maximal availability.

Some changes in the inventory (change in capacity of a room type, change in structure of a group of room types, change in number of allocated rooms, cancellation ...) may induce deep changes in the availability values. An option in the user interface enables to re-arrange the accepted floating bookings in order to re-equilibrate those availabilities.

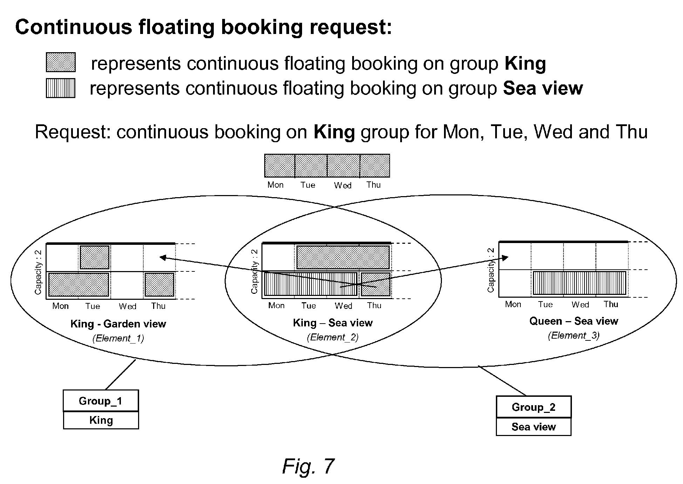

Figure 7 shows an example of continuous floating booking request. Let's suppose that the current reservation status, for a period from Monday to Thursday of a given week, is represented in the two groups Group_1 King and Group_2 Sea View. The two groups belong to the super group Double (not shown). A new customer request is received for a continuous booking (i.e. the customer does not accept the risk of being moved during the stay) for a King room type. The floating inventory method of a preferred embodiment of the resent invention verifies if it s possible to free a period matching the received request. This is done in two steps:
1. Freeing availability on the requested group:
   for all days of the given period, it retrieves the floating bookings assigned on any element of the requested group. In the example, it retrieves all the floating bookings temporarily assigned to element_1 and element_2. It then tries to assign those floating bookings on other elements, out of the requested group, so as to free as much slot as possible on the requested group. In the example, only the floating booking on group King temporarily assigned to element_2 can be moved to element_3. After this re-assignment, we have freed as much availability as possible on the requested group.
2. Freeing continuity on the requested group:
   as the request ask for the continuity of the booking, the system needs to free continuity inside the requested group. In this step, it tries to re-assign the floating bookings of each element to the other elements of the requested group, to free as much continuity as possible on one of the element. In the example, the continuous availability for the requested period on element_1 is 1 (after moving the floating booking on period Mon-Tue (or Tue) to element_2), and the continuous availability for the requested period on element_2 is 1 as well (after moving the floating booking on period Thu to element_1). It is then possible to accept the request, indifferently and temporarily on element_1 or element_2 (element_2 in the example).

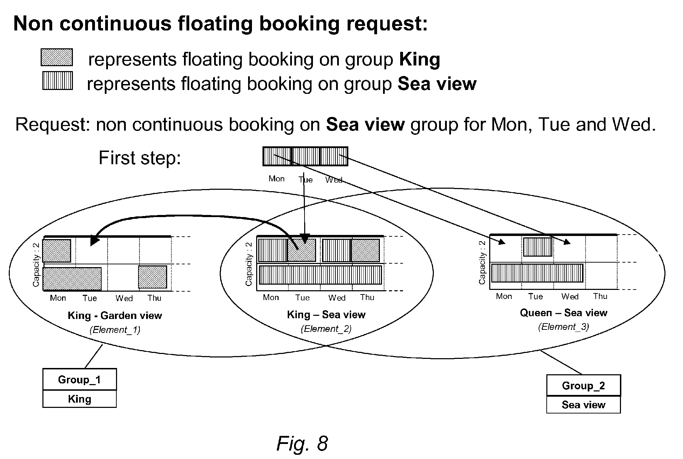

In Figure 8 an example of non-continuous floating booking request is shown. Again, the current reservation status, for a period from Monday to Thursday of a given week, is represented in the two groups Group_1 "King" and Group_2 "Sea View" including a total of 3 elements. The new request is for a non-continuous booking for the period Monday to Wednesday, with the mandatory feature of being SeaView. The method splits the non-continuous floating booking request into daily continuous floating request, and applies the same principle as in the previous example (without step 2 because in this case it is not necessary).

It is to be noted that at this stage it is not taken into consideration an optimization of the continuity of the booking, i.e. trying to maximise as much as possible the continuity of non-continuous bookings. This functionality can be called by the operator (e.g. the Hotel manager) to fix a particular booking or group of bookings. E.g. this can be left as last step when no new reservations are expected (e.g. on the day of use of the room or when all rooms are booked), but the system is designed to leave freedom of choice to the administrator or operator of the system.

For the sell process, the benefit of the method of a preferred embodiment of the present invention is that a given physical item can be sold either in a product with very precise criteria (room type), and at the same time be sold in a product with very vague criteria (group). If the customer books in the group, the booking will float between all the room types, without being fixedly assigned to a particular room type. This process allows a future request from a more precise customer to be also accommodated. In other terms, it gives the opportunity to reserve a product without blocking a specific and physical item at the room type level that could be a future customer request.

The benefit of the floating inventory method of a preferred embodiment of the present invention for the provider is to automatically maximize the hotel occupancy rate by giving the richest and most accurate availability (without blocking an accurate product if not needed) thanks to a smart and flexible two-level inventory, that dissociates the "technical" view (i.e. the physical view, from the provider) and the "marketing/customer" view (what will be seen by the customer).

The benefit of the floating inventory method for customers is to have the possibility to reserve a specific product, in a room type (for instance in the hotel business, a "double-bed room with sea-view and a balcony"), or a less specific product in a group (for instance in the hotel business, a "double-bed room"). Moreover, it gives the possibility to maximize the availability for specific products at the room type level, thanks to the floating reservation at the group level. The system also ensures that the continuity of his stay will be maximised. It is likely that this flexibility will be rewarded with preferential rates proportional to the degree of flexibility accepted by customers.

To ensure that the continuity of the stay of a non-continuous booking on a group is maximised, a mechanism can be triggered by the hotelier at any time, on one booking or group of bookings (ranked by order of importance). In a preferred embodiment of the present invention the mechanism includes the following steps:
- the booking is removed from the inventory (similarly to a cancellation), i.e. it is removed from all elements where it was assigned;
- starting from check-in date, the system loops over each element of the requested group, to compute the number of consecutive days for which the booking can be assigned on this element. The booking is assigned to the element that has the maximum possible number of consecutive days, for a duration Dᵢ equal to this number of days. If this duration Dᵢ is shorter than the requested booking period, the process is iterated from the date "check-in date+duration Dᵢ", until check-out date is reached;
- the booking is flagged as fixed (it is no more considered "floating" and it won't be allowed to change anymore)

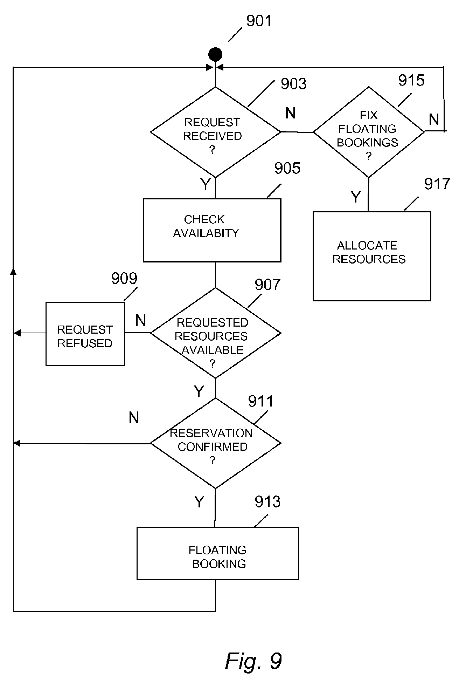

The method described above is also represented in the diagram shown in figure 9. We will use in the following example the case of hotel rooms booking, where the criteria specified in the customers' request represent room characteristics which are considered mandatory for the room booking; the time unit used in the example will be the single day. Those skilled in the art will easily appreciate that the method according to the present invention could be used equally well in several different circumstances and field, where a limited number of resources is available over period of time. Possible alternative resources include, just to make some examples: sport structures, seats on public transports, seats for shows or sport events, slots with service providers (e.g. hospital services or specialist visits). In general the method according to the present invention can be applied to any resource management system where the resources are "perishable", i.e. they are "wasted" if not allocated and used before predetermined time thresholds. The method begins at black circle 901 and then goes to 903 where loops (through 915, described below) until a reservation request or enquiry is received. The request will include the specification of a set of criteria which define the customer's desired characteristics. The system will check on the repository (see Inventory Database 103 on Figure 1) to verify the availability of the requested resource (905). If the requested resource is not available (907), then non-availability is communicated at box 909 (and/or reservation request is refused). If a resource with all requested criteria is available and the reservation is confirmed (911), the system records a "Floating booking" by temporarily assigning the booking request on one of the possible resources (box 913); in a preferred embodiment this is done by flagging each resource satisfying the requested criteria. When future booking or availability requests will be received (i.e. at next passage through box 905), the previously accepted floating bookings will be allowed to move between the possible resources satisfying their criteria, so as to free availability for the requested booking. The higher the number of requested criteria the smaller will be the set of possible resources satisfying those criteria. It is to be noted that a resource can be included in several possible sets of similar resources: for a resource to be available it is necessary that for each of the existing sets of similar resources to which the resource belongs, the number of previous "floating" reservation is lower than the number of resources in that set (or lower than a predetermined "acceptable threshold" (higher than the number of resources) if overbooking is to be allowed). If the customer's request includes an indication of "strong" continuity, it is necessary that a resource is available over the whole period of time. Otherwise the continuity is not considered at this stage, but it will be taken into account at a later stage when the continuity of all bookings will undergo an optimisation process aiming at maximising the number of continuous booking or, in other words, minimising change of rooms during the reservation period. When a request of "Fix Floating Booking" is received (915), the system transforms the floating booking into a permanent booking (917) as explained above with all the considerations about maximising the booking continuity as detailed in previous paragraphs.
It will be appreciated that alterations and modifications may be made to the above without departing from the scope of the disclosure. Naturally, in order to satisfy local and specific requirements, a person skilled in the art may apply to the solution described above many modifications and alterations. Particularly, although the present disclosure has been described with a certain degree of particularity with reference to preferred embodiment(s) thereof, it should be understood that various omissions, substitutions and changes in the form and details as well as other embodiments are possible; moreover, it is expressly intended that specific elements and/or method steps described in connection with any disclosed embodiment of the disclosure may be incorporated in any other embodiment as a general matter of design choice.

Similar considerations apply if the program (which may be used to implement each embodiment of the disclosure) is structured in a different way, or if additional modules or functions are provided; likewise, the memory structures may be of other types, or may be replaced with equivalent entities (not necessarily consisting of physical storage media). Moreover, the proposed solution lends itself to be implemented with an equivalent method (having similar or additional steps, even in a different order). In any case, the program may take any form suitable to be used by or in connection with any data processing system, such as external or resident software, firmware, or microcode (either in object code or in source code). Moreover, the program may be provided on any computer-usable medium; the medium can be any element suitable to contain, store, communicate, propagate, or transfer the program. Examples of such medium are fixed disks (where the program can be pre-loaded), removable disks, tapes, cards, wires, fibres, wireless connections, networks, broadcast waves, and the like; for example, the medium may be of the electronic, magnetic, optical, electromagnetic, infrared, or semiconductor type.

In any case, the solution according to the present disclosure lends itself to be carried out with a hardware structure (for example, integrated in a chip of semiconductor material), or with a combination of software and hardware.

## Claims

1. A reservation method for maximizing, through a client-server data processing system, the exploitation of a plurality of perishable service resources, each resource of the plurality of perishable service resources being classified according to a plurality of criteria, the method including the steps of:
- the server maintaining in a repository information on the plurality of perishable service resources, indicating for each resource the availability with respect to predetermined units of time;
- the server receiving, by a reservation client module an availability query for at least one resource for a period of time which is a multiple of the predetermined unit of time, including an indication of at least one criterion of the plurality of criteria;
- the server checking on the repository the availability of at least one resource of the plurality of perishable service resources satisfying the at least one requested criterion over the requested period;
- responsive to at least one resource being available the server communicating the availability to the reservation client module; and
- responsive to the client reservation module confirming the reservation of the resource, recording a floating reservation in the repository, flagging all resources in the repository satisfying the at least one requested criterion, wherein a resource is considered available for future enquiries if the number of floating reservations previously recorded for each set of at least one criterion is lower than a predetermined acceptable booking thresholds for that set of at least one criterion.

2. The reservation method of claim 1 wherein the predetermined acceptable booking thresholds corresponds to the number of resources satisfying that set of at least one criterion.

3. The method of any preceding claim wherein one of the plurality of criteria is a continuity parameter, according to which the reservation request can be conditioned to the availability of the same resource for the whole period of time.

4. The method of any preceding claim further including:
- responsive to a completion trigger event, the system transforming the floating reservation into a fixed reservation assigning to each confirmed reservation a specific resource.

5. The method of claim 4 wherein the trigger event includes an administrator input.

6. The method of claim 4 or 5 wherein the trigger event includes reaching a time thresholds.

7. The method of any claim from 4 to 6 when depending on claim 3 wherein the step of assigning to each confirmed reservation a specific resource is done so that the number of reservation requests to which a single resource is assigned for the whole period of time is maximized.

8. The method of any claim from 4 to 7 when depending on claim 3 wherein the step of assigning to each confirmed reservation a specific resource is done so that the length of continuous period of assignment of a single resource is maximised.

9. The method of any claim from 4 to 7 when depending on claim 3 wherein the step of assigning to each confirmed reservation a specific resource is done so that the average length of continuous period of assignment of all resources is maximised.

10. The method of any preceding claim wherein the perishable service resources are hotel rooms, wherein each criterion of the plurality of criteria represents a room feature and the predetermined unit of time is a day or multiple of a day.

11. A computer program comprising instructions for carrying out the steps of the method according to any preceding claim, when said computer program is executed on a computer.

12. A computer program product including computer readable means embodying the computer program of claim 11.

13. A data processing system for maximizing, through a client-server data processing system, the exploitation of a plurality of perishable service resources, each resource of the plurality of perishable service resources being classified according to a plurality of criteria, wherein the system comprises one or more components adapted to perform the method of any claim 1 to 10.

14. A service deployed in a data processing system for implementing the method of any claim 1 to 10.
